# EUROPEAN PATENT APPLICATION

(11) **EP 4 707 002 A2**
(43) Date of publication of application: **11.03.2026**
(21) Application number: 26152207.2
(22) Date of filing: 06.05.2022
(51) Int. Cl.: B60D 1/24

(54) **SELF-LOCKABLE ELECTRIC TRAILER HITCHING APPARATUS**

(30) Priority: 20.05.2021 CN 202110551566
(62) Divisional of application: 22172010.5
(71) Applicant: Zhejiang Zhiyou Automotive Technology Co., Ltd., Zhejiang, Shaoxing 312500 (CN)
(72) Inventor: Xu, Naiyong, Shaoxing, 312500 (CN); Wang, Yu, Shaoxing, 312500 (CN); Shao, Junjian, Shaoxing, 312500 (CN); Han, Zhengxin, Shaoxing, 312500 (CN); Zhu, Fengdong, Shaoxing, 312500 (CN); Liang, Shangjia, Shaoxing, 312500 (CN)
(74) Representative: karo IP

(57) **Abstract**

Disclosed is a self-lockable electric trailer hitch apparatus, which relates to the technical field of trailer hitching apparatuses. The self-lockable electric trailer hitching apparatus comprises a trailer hitch body (1) rotatably switching between a resting position and an operating position, a power system actuating the trailer hitch body to rotate, and a mounting bracket (2) secured to a vehicle. The power system comprises an electric motor (7), and a transmission assembly rotating by drive of the electric motor and drive the trailer hitch body to rotate. A self-locking assembly is provided between the transmission assembly and the mounting bracket (2). In particular, a spring seat (11) having a connection stud (1101) is provided between a first gear (3) and the mounting bracket (2); a connection stud (1101) is elastically connected in a first through-hole (1102) via a spring and elastically moves axially in the first through-hole (1102). To enable self-locking, the first gear (3) moves axially to squeeze the spring seat (11) to push the connection stud (1101) to be plugged into a plughole (1301); or the connection stud (1101) is provided on the first gear (3), such that the first gear (3) moves axially to push the connection stud into the plughole (1301).

## Description

### FIELD

The present disclosure relates to trailer hitching apparatuses, and more particularly relate to a self-lockable electric trailer hitching apparatus.

### BACKGROUND

People's demands on vehicle hitching performance increase with their pursuit of a more diversified way of life. To retrofit an electric trailer hitch, a mounting bracket is used to securely hold the electric trailer hitch to a rear bumper of a vehicle, wherein an electric motor actuates gear drive to produce a circumferential rotation, driving the trailer hitch body to rotatably switch between an initial position and an operating position; in this way, the electric trailer hitch may significantly enhance the vehicle's hitching capacity, and meanwhile the trailer hitch may be electrically opened and closed, which facilitates manipulation of the trailer hitch. If the trailer hitch body is loosened or unstable during the hitching process, the hitched object would be easily disengaged from the trailer hitch body. Therefore, it is crucial to tightly lock the electric trailer hitch at the hitching position so as to prevent loosening of the operating trailer hitch body. However, since the electric trailer hitch usually has a hitching load of as high as 1,500 kg, the self-locking strength of the electric motor can hardly meet locking requirements.

### SUMMARY

A series of simplified concepts are introduced in this Summary, which will be described in further detail in the Embodiments below. This Summary is not intended to limit the key features and essential technical features of the technical solution sought for protection, and not meant to determine the scope sought for protection of the technical solutions.

A self-lockable electric trailer hitching apparatus is disclosed to solve, at least in part, the problems mentioned above.

A technical solution adopted by the present disclosure to solve the above technical problems is provided below:

a self-lockable electric trailer hitching apparatus, comprising: a trailer hitch body rotatably switch between a resting position and an operating position, a power system actuating the trailer hitch body to rotate, and a mounting bracket secured to a vehicle, wherein the power system comprises an electric motor, and a transmission assembly rotating under drive of the electric motor and driving the trailer hitch body to rotate; the transmission assembly is mounted on the mounting bracket and rotatable relative to the mounting bracket; a self-locking assembly is provided between the transmission assembly and the mounting bracket, such that when the trailer hitch body is at the operating position, the self-locking assembly is self-locked to limit the transmission assembly from rotating.

This solution offers a beneficial effect as follows:
In the prior art, due to the heavy load imposed on the electric trailer hitch, the self-locking force of its electric motor can hardly meet locking requirements. In the self-lockable electric trailer hitching apparatus provided in the technical solution of the present disclosure, a self-locking assembly is provided. When the electric trailer hitching apparatus is idle, it is at the resting position and its entirety is hidden behind the rear bumper of a vehicle, such that it does not affect the appearance of the vehicle. To hitch a trailer, the electric motor is activated to rotate positively, driving the transmission assembly to rotate and driving the trailer hitch body to rotate till the operating position, and then the trailer hitch body is exposed outside the rear bumper of the vehicle. The self-locking assembly is disposed between the transmission assembly and the mounting bracket. Since the mounting bracket is secured to the vehicle, the self-locking assembly, after being self-locked, limits rotation of the transmission assembly such that the transmission assembly no longer drives the trailer hitch body to rotate, thereby securely holding the trailer hitch body at the operating position, which improves hitching stability and security and ensures smooth proceeding of the hitching process. After the hitching work is done, the electric motor is activated to rotate reversely, causing the self-locking assembly to be unlocked, and the transmission assembly rotates reversely, driving the trailer hitch body to rotate till the resting position, and then the electric motor is deactivated. As the electric trailer hitching apparatus is idle at this time, it may be securely held to the resting position by self-locking of the electric motor.

Preferably, the transmission assembly comprises a first gear and a transmission shaft in thread-fit with the first gear; the trailer hitch body and the first gear are transmission-connected via rotation of the transmission shaft; the transmission shaft passes through the mounting bracket and is rotatable relative to the mounting bracket; the first gear is driven by the electric motor to drive the transmission shaft to rotatably switch between the resting position and the operating position, or at the operating position, the first gear is driven by the electric motor to rotate relative to the transmission shaft and move axially; the self-locking assembly is provided between the first gear and the mounting bracket, the first gear moving axially towards the mounting bracket to push the self-locking assembly to be self-locked.

Preferably, a limiting assembly for limiting rotating stroke of the transmission assembly is further provided between the transmission assembly and the mounting bracket.

Preferably, the self-locking assembly comprises a bolting element circumferentially fixed relative to the transmission shaft and a socket fixed relative to the mounting bracket, the first gear moving axially to push the bolting element into the socket to be self-locked.

Preferably, a spring seat having a connection stud is provided between the first gear and the mounting bracket, the spring seat being circumferentially limited with the transmission shaft; a first through-hole is provided in the spring seat; the connection stud is elastically connected in the first through-hole via the first spring and elastically moves axially in the first through-hole; a retaining seat is fixedly provided on the mounting bracket, and a plughole is provided in the retaining seat, such that the first gear moves axially to push the connection stud to be plugged into the plughole to be self-locked.

Preferably, an elastic strip is provided between the first gear and the spring seat, the first gear moving axially to squeeze the elastic stripe, causing the elastic strip to push the connection stud into the plughole to be self-locked.

Preferably, the limiting assembly comprises a guide groove provided on one of the spring seat and the retaining seat, and a guide block provided on the other one of the spring seat and the retaining seat, such that when the transmission shaft rotates, the guide block slides in the guide groove, two ends of the guide groove limiting sliding stroke of the guide block to limit the trailer hitch body either to the resting position or the operating position.

Preferably, a limiting bracket having a second through-hole is provided between the first gear and the mounting bracket, the limiting bracket being circumferentially limited with the transmission shaft; a limit ball is provided in the second through-hole, the limit ball being in clearance fit with the through-hole; the first gear and the limit ball are connected via a second spring; a retaining seat is fixedly provided on the mounting bracket; and a plughole is provided in the retaining seat, such that the first gear moves axially to push the limit ball to be partially plugged into the plughole to be self-locked.

Preferably, the trailer hitch body is sleeved over the transmission shaft and is circumferentially limited with the transmission shaft; a stopper nut for axially limiting the trailer hitch body is provided at the outer side of the trailer hitch body.

Preferably, the transmission assembly further comprises a second gear which is driven to rotate by the electric motor, the second gear being engaged with the first gear.

These features and advantages of the present disclosure will be disclosed in more detail in the embodiments below with reference to the accompanying drawings.

### BRIEF DESCRIPTION OF THE DRAWINGS

Hereinafter, the present disclosure will be illustrated with reference to the accompanying drawings, in which:
Fig. 1 is a stereoscopic structural diagram of a self-lockable electric trailer hitching apparatus according to the present disclosure.
Fig. 2 is an exploded view of the self-lockable electric trailer hitching apparatus according to the present disclosure.
Fig. 3 is a sectional view of the self-lockable electric trailer hitching apparatus in a self-locked state according to the present disclosure.
Fig. 4 is a stereoscopic structural diagram of a spring seat according to the present disclosure.
Fig. 5 is a stereoscopic structural diagram of a retaining seat according to the present disclosure.
Fig. 6 is a stereoscopic structural diagram of a first gear according to the present disclosure.
Fig. 7 is a stereoscopic structural diagram of a transmission shaft according to the present disclosure.
Fig. 8 is a stereoscopic structural diagram of a trailer hitch according to the present disclosure.

Reference Numerals:
trailer hitch body 1; rotating-disc bearing body 101; hitch ball 102; mounting bracket 2; first gear 3; transmission shaft 4; first thread 401; second thread 402; second gear 5; driving rod 6; second bevel gear 601; electric motor 7; motor shaft 701; first bevel gear 702; bearing 8; end cap 9; stopper nut 10; spring seat 11; connection stud 1101; first through-hole 1102; first spring 1103; guide groove 1104; elastic strip 12; retaining seat 13; plughole 1301; guide block 1302.

### DETAILED DESCRIPTION

Hereinafter, the self-lockable electric trailer hitching apparatus according to the present disclosure will be described in further detail in conjunction with the accompanying drawings and the embodiments:

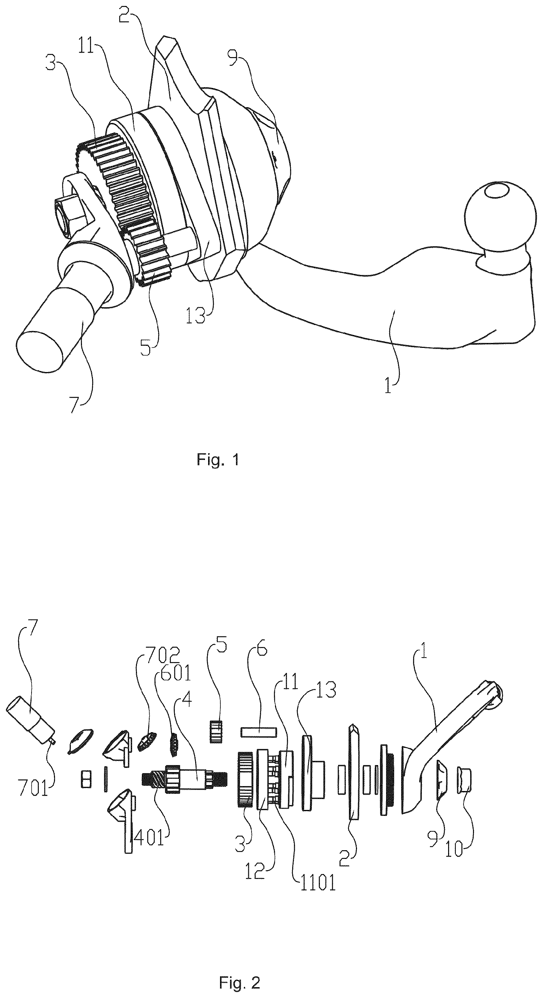

Referring to Figs. 1 to 8, a self-lockable electric trailer hitching apparatus comprises: a trailer hitch body 1 rotatably switching between a resting position and an operating position, a power system actuating the trailer hitch body 1 to rotate, and a mounting bracket 2 secured to a vehicle; wherein the power system comprises an electric motor 7 and a transmission assembly rotating under drive of the electric motor 7 and driving the trailer hitch body 1 to rotate, the transmission assembly being mounted on the mounting bracket 2 and rotatable relative to the mounting bracket 2; and a self-locking assembly is provided between the transmission assembly and the mounting bracket 2, such that when the trailer hitch body 1 is at the operating position, the self-locking assembly is self-locked to limit the transmission assembly from rotating.

In this embodiment, by providing a self-locking assembly in the self-lockable electric trailer hitching apparatus, when the electric trailer hitching apparatus is idle, it is at the resting position and is entirely hidden behind the rear bumper of the vehicle, not affecting the appearance of the vehicle. To hitch a trailer, the electric motor 7 is activated to rotate positively to drive the transmission assembly to rotate, whereby to drive the trailer hitch body 1 to rotate till the operating position; at which time the trailer hitch body 1 is exposed outside the rear bumper of the vehicle. The self-locking assembly is provided between the transmission assembly and the mounting bracket 2. Since the mounting bracket 2 is secured to the vehicle, the self-locking assembly, after being self-locked, limits rotation of the transmission assembly such that the transmission assembly no longer drives the trailer hitch body 1 to rotate, thereby securely holding the trailer hitch body 1 to the operating position, so as to ensure smooth proceeding of the hitching process. After the hitching work is done, the electric motor 7 is activated to rotate reversely, causing the self-locking assembly to be unlocked, and the transmission assembly rotates reversely, driving the trailer hitch body 1 to rotate till the resting position, and then the electric motor 7 is deactivated; as the electric trailer hitching apparatus is idle at this time, it may be securely held to the resting position by self-locking of the electric motor 7.

A limiting assembly for limiting rotating stroke of the transmission assembly is further provided between the transmission assembly and the mounting bracket 2 so as to limit rotation of the transmission assembly either to the resting position or to the operating position.

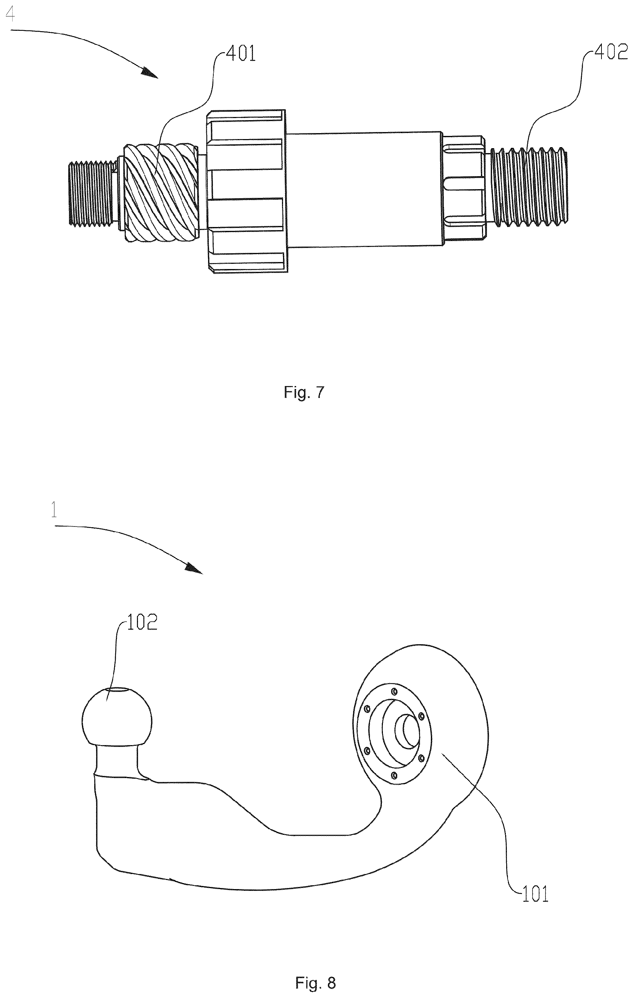

As illustrated in Fig. 8, the trailer hitch body 1 comprises a rotating-disc bearing body 101 which is disposed at one end of the trailer hitch body 1 and connected to the transmission assembly, and a hitch ball 102 which is disposed at the other end of the trailer hitch body 1.

Figs. 1 to 3 illustrate an embodiment of the present disclosure, wherein the transmission assembly comprises a first gear 3, a transmission shaft 4, and a second gear 5.

The electric motor 7 comprises a motor shaft 701, a driving rod 6 is securely provided on the second gear 5, a first bevel gear 702 is provided at the end of the motor shaft 701 proximal to the driving rod 6, and a second bevel gear 601 engaged with the first bevel gear 702 is disposed at the end of the driving rod 6 proximal to the motor shaft 701, wherein the motor shaft 701 drives the first bevel gear 702 to rotate synchronously, and the first bevel gear 702 drives the second bevel gear 601 and the driving rod 6 to rotate, whereby to drive the second gear 5 to rotate; meanwhile, the second gear 5 is engaged with the first gear 3, whereby the second gear 5 drives the first gear 3 to rotatably switch between the resting position and the operating position.

The first gear 3 and the trailer hitch body 1 are disposed at two sides of the mounting bracket 2, respectively; the transmission shaft 4 passes through the mounting bracket 2 and is freely rotatable relative to the mounting bracket 2; two ends of the transmission shaft 4 are connected to the first gear 3 and the trailer hitch body 1, respectively, to perform transmission.

In this embodiment, to actuate the transmission shaft 4 to transmit, as illustrated in Figs. 2, 3, 7, and 8, a first thread 401 is provided at the front end of the transmission shaft 4, the first gear 3 is thread-fitted with the transmission shaft 4, and the rotating-disc bearing body 101 is circumferentially limitation-fitted with the transmission shaft 4. Preferably, the rotating-disc bearing body 101 is spline-fitted with the transmission shaft 4. At the non-operating position, the first gear 3 drives the transmission shaft 4 and the trailer hitch body 1 to rotate synchronously; and at the operating position, the first gear 3 rotates spirally relative to the transmission shaft 4 and moves axially.

Alternatively, in other embodiments, the transmission shaft may be a flattened column, and a flattened hole for the flattened column to pass through is provided in the middle of the rotating-disc bearing body.

Alternatively, in other embodiments, the transmission shaft may have a polygonal-prism structure, and a polygonal hole fitted with the polygonal-prism structure is provided in the middle of the rotating-disc bearing body.

The second gear 5 and the driving rod 6 are circumferentially limited. Preferably, the second gear 5 is fitted at its flattened section with the driving rod 6. Alternatively, in other embodiments, the second bevel 5 and the driving rod 6 may adopt other circumferential limiting manners, such as keying fit, spline fit, etc.

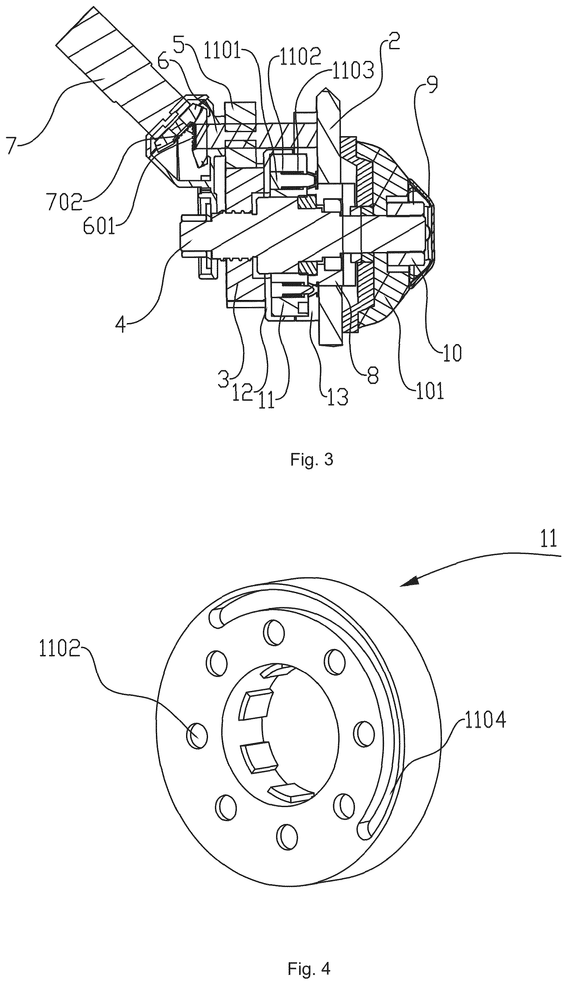

As illustrated in Fig. 3, the transmission shaft 4 and the mounting bracket 2 are fitted via a bearing 8, wherein the bearing 8 comprises an inner ring securely connected to the transmission shaft 4 and an outer ring securely connected to the mounting bracket 2.

To prevent the trailer hitch body 1 from axial disengagement during the hitching process, the trailer hitch body and the transmission assembly are axially limited. Specifically, as illustrated in Figs. 2 and 3, an end cap 9 and a stopper nut 10 are provided at the outer side of the trailer hitch body 1; as illustrated in Fig. 7, a second thread 402 is provided at the tail end of the transmission shaft 4, and the stopper nut 10 is screwed on the second thread 402 at the tail end of the transmission shaft 4 whereby to axially limit the trailer hitch body 1; the end cap 9 covers the second thread 402 to render a better appearance.

The self-locking assembly in this embodiment is disposed between the first gear 3 and the mounting bracket 2; at the operating position, the first gear 3 is actuated by the second gear 5 to move axially towards the direction of the mounting bracket 2 to push the self-locking assembly to be self-locked.

The self-locking assembly comprises a bolting element circumferentially fixed relative to the transmission shaft 4 and a socket fixed relative to the mounting bracket 2; at the non-operating position, the bolting element and the socket do not contact, such that the bolting element may rotate freely relative to the socket; and at the operating position, the first gear 3 moves axially to push the bolting element into the socket to be self-locked.

Specifically, as illustrated in Fig. 2 and Fig. 3, a spring seat 11 is disposed between the first gear 3 and the mounting bracket 2, wherein the spring seat 11 and the transmission shaft 4 are circumferentially limited, preferably spline-fitted; an elastic strip 12 is disposed between the first gear 3 and the spring seat 11; a connection stud 1101 is provided in the spring seat 11; a first through-hole 1102 for mounting the connection stud 1101 is provided in the spring seat 11; a first spring 1103 is provided in the first through-hole 1102, wherein the connection stud 1101 is mounted in the first through-hole 1102 via the first spring 1103 and elastically moves axially in the first through-hole 1102; a length of the connection stud 1101 is greater than a thickness of the spring seat 11; and a retaining seat 13 is fixedly provided on the mounting bracket 2, and a plughole 1301 is provided in the retaining seat 13. At the operating position, when self-locking is not needed, the end of the connection stud 1101 proximal to the elastic strip 12 projects outside the spring seat 11, and the end of the connection stud 1101 distal from the elastic strip 12 is hidden in the spring seat 11; at the operating position, when self-locking is needed, the first gear 3 moves axially to squeeze the elastic strip 12, causing the elastic strip 12 to be deformed to push the connection stud 1101 to elastically move axially forward and be plugged into the plughole 1301 for rigidly self-locking, which enhances self-locking strength such that the trailer hitching apparatus can still maintain a secure self-locking with a heavy load.

To ensure self-locking strength, a plurality of connection studs 1101 are provided in the spring seat 11; preferably, the plurality of connection studs 1101 are circumferentially distributed along the spring seat 11.

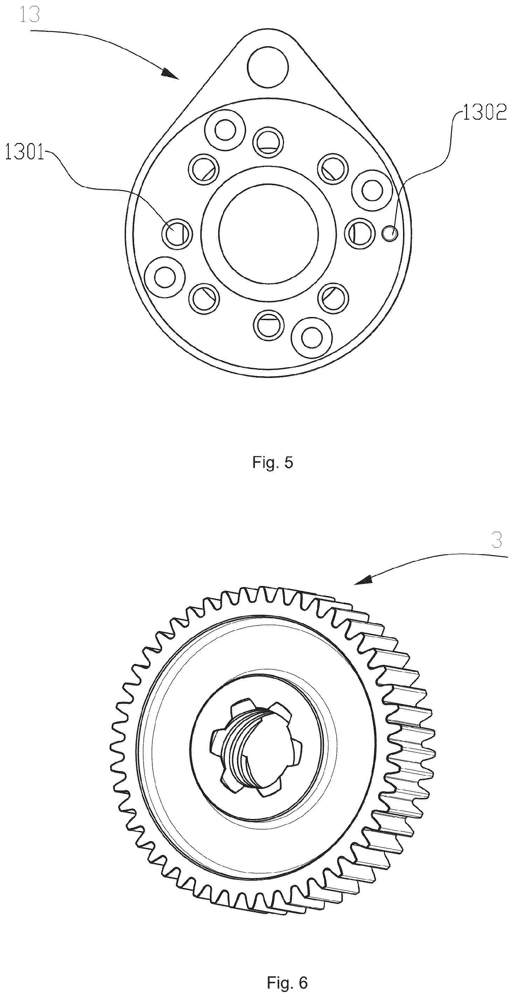

The specific structure of the limiting assembly is that as illustrated in Fig. 4, a guide groove 1104 is provided on the spring seat 11, wherein the guide groove 1104 is preferably an arcuate guide groove, as illustrated in Fig. 5, a guide block 1302 is provided on the retaining seat 13, wherein when the transmission shaft 4 is rotating, the guide block 1302 slides in the guide groove 1104; the upper end wall and the lower end wall of the guide groove 1104 form a stroke limiting section to limit the sliding stroke of the guide block 1302 and further limit the rotating range of the spring seat 11, thereby limiting rotating strokes of the transmission shaft 4 and the trailer hitch body 1, whereby to limit the trailer hitch body 1 either to the resting position or to the operating position. A limit switch signal is provided at the resting position, such that when the trailer hitch body 1 rotates to the resting position, the electric motor 7 receives the limit switch signal to stop operation. When the trailer hitch body 1 rotates to the operating position, due to the limiting action, the spring seat 11 stops rotating and limits the transmission shaft 4 to cause the transmission shaft 4 to stop rotating; however, the electric motor 7 is not deactivated yet, which drives the second gear 5 and the first gear 3 to rotate continuously, such that the first gear 3, under a torque action, rotates spirally relative to the transmission shaft 4 and moves axially.

Alternatively, in other embodiments, the guide groove may be provided on the retaining seat, and the guide block is disposed on the guide groove.

Hereinafter, illustration will be made an operating process of the self-lockable electric trailer hitching apparatus in this embodiment:

To hitch a trailer, the electric motor 7 is activated to rotate positively, then the motor shaft 701 rotates positively to drive the driving rod 6 and drive the second gear 5 to rotate positively, further driving the first gear 3, the transmission shaft 4, and the spring seat 11to rotate positively, and then the trailer hitch body 1 rotates downward and outward synchronously with the transmission shaft 4; when the trailer hitch body 1 rotates till the operating position, the guide block 1302 is limited by the lower end wall of the guide groove 1104, such that the spring seat 11 stops rotating and the transmission shaft 4 and the trailer hitch body 1 also stop rotating; the electric motor 7 actuates the second gear 5 and the first gear 3 to continuously rotate positively, such that the first gear 3 is loosened from the transmission shaft 4 to rotate spirally relative to the transmission shaft 4 and move axially towards the elastic strip 12, squeezing the elastic strip 12 to be deformed to push the connection stud 1101 in the spring seat 11 to move axially into the plughole 1301 in the retaining seat 13 to enable locking, thereby locking the trailer hitch body 1 to the operating position. After the hitching work is done, the electric motor 7 rotates reversely, actuating the driving rod 6 and the second gear 5 to rotate reversely; since the transmission shaft 4 is still in the locked state, the second gear 5 drives the first gear 3 to rotate spirally and reversely relative to the transmission shaft 4 and move axially towards the direction away from the elastic strip 12; then the elastic strip 12 resumes from the deformation, and the connection stud 1101 is plugged out from the plughole 1301 and resumes its initial position under the action of the first spring 1103, thereby completing unlocking; the transmission shaft 4 drives the trailer hitch body 1 to rotate reversely with the first gear 3 till the resting position, and then the electric motor 7 stops operation.

In an embodiment of the present disclosure, the self-locking assembly comprises: a limiting bracket which has a second through-hole and is disposed between the first gear and the mounting bracket, the limiting bracket and the transmission shaft being circumferentially limited; a stopper ball is provided in the second through-hole, the stopper-ball being clearance-fitted with the second through-hole, the first gear and the stopper ball being connected via the second spring; a retaining seat is fixedly provided on the mounting bracket, a plughole being provided in the retaining seat, such that the first gear moves axially to push the stopper ball to be partially plugged into the plughole to be self-locked.

In an embodiment of the present disclosure, the self-locking assembly comprises: a spring seat which has a connection stud and is disposed between the first gear and the mounting bracket, the spring seat and the transmission shaft being circumferentially limited; a first through-hole is provided in the spring seat, and the connection stud is elastically connected in the first through-hole via the first spring and elastically moves axially in the first through-hole; a plughole is provided in the mounting bracket, such that the first gear moves axially to squeeze the spring seat to push the connection stud into the plughole to be self-locked.

In an embodiment of the present disclosure, the self-locking assembly comprises: a connection stud fixedly provided on the first gear, and a plughole is provided in the mounting bracket, such that the first gear moves axially to push the connection stud into the plughole to be self-locked; at which time the first gear and the transmission shaft are connected with axial limitation and the first gear is axially movable relative to the transmission shaft; the first gear and the second gear have a preset angle, such that at the operating position, after the transmission shaft is limited, the second gear may apply an axial push force to the first gear to push the first gear to move axially.

The embodiments described above are only examples and do not limit the scope of the present disclosure. Those skilled in the art may contemplate other embodiments that can achieve the same function within the scope of protection of the claims of the present disclosure on the basis of the above embodiments.

## Claims

1. A self-lockable electric trailer hitching apparatus, **characterized by** comprising: a trailer hitch body (1) rotatable between a resting position and an operating position, a power system actuating the trailer hitch body (1) to rotate, and a mounting bracket (2) secured to a vehicle; wherein the power system comprises an electric motor (7), and a transmission assembly rotating under drive of the electric motor (7) and driving the trailer hitch body (1) to rotate, the transmission assembly being mounted on the mounting bracket (2) and rotatable relative to the mounting bracket (2); and a self-locking assembly is provided between the transmission assembly and the mounting bracket (2), such that when the trailer hitch body (1) is at the operating position, the self-locking assembly is self-locked to limit the transmission assembly from rotating;
wherein the transmission assembly comprises a first gear (3) and a transmission shaft (4) in thread-fit with the first gear (3); the trailer hitch body (1) and the first gear (3) are transmission-connected via rotation of the transmission shaft (4); the transmission shaft (4) passes through the mounting bracket (2) and is rotatable relative to the mounting bracket (2); the first gear (3) is driven by the electric motor (7) to drive the transmission shaft (4) to rotatably switch between the resting position and the operating position, or at the operating position, the first gear (3) is driven by the electric motor (7) to rotate relative to the transmission shaft (4) and move axially; and the self-locking assembly is provided between the first gear (3) and the mounting bracket (2), the first gear (3) moving axially towards the mounting bracket (2) to push the self-locking assembly to be self-locked;
wherein a limiting assembly for limiting rotating stroke of the transmission assembly is further provided between the transmission assembly and the mounting bracket (2);
wherein the self-locking assembly comprises a bolting element circumferentially fixed relative to the transmission shaft (4) and a socket fixed relative to the mounting bracket (2), the first gear (3) moving axially to push the bolting element to be plugged into the socket to be self-locked;
**characterized in that**
a spring seat (11) having a connection stud (1101) is provided between the first gear (3) and the mounting bracket (2), the spring seat (11) being axially limited with the transmission shaft (4); a first through-hole (1102) is provided in the spring seat (11); the connection stud (1101) is elastically connected in the first through-hole (1102) via a spring and elastically moves axially in the first through-hole (1102); a plughole (1301) is provided in the mounting bracket (2), such that the first gear (3) moves axially to squeeze the spring seat (11) to push the connection stud (1101) to be plugged into the plughole (1301) to enable self-locking; or, the connection stud (1101) is provided on the first gear (3), and a plughole (1301) is provided in the mounting bracket (2), such that the first gear (3) moves axially to push the connection stud into the plughole (1301) to be self-locked.

2. The self-lockable electric trailer hitching apparatus of claim 1, **characterized in that** a spring seat (11) having a connection stud (1101) is provided between the first gear (3) and the mounting bracket (2), the spring seat (11) being circumferentially limited with the transmission shaft (4); a first through-hole (1102) is provided in the spring seat (11); the connection stud (1101) is elastically connected in the first through-hole (1102) via a first spring (1103) and elastically moves axially in the first through-hole (1102); a retaining seat (13) is securely provided on the mounting bracket (2), and a plughole (1301) is provided in the retaining seat (13), such that the first gear (3) moves axially to push the connection stud (1101) to be plugged into the plughole (1301) to be self-locked.

3. The self-lockable electric trailer hitching apparatus of claim 2, **characterized in that** an elastic strip (12) is provided between the first gear (3) and the spring seat (11), the first gear (3) moving axially to squeezes the elastic strip (12), causing the elastic strip (12) to push the connection stud (1101) to be plugged into the plughole (1301) to be self-locked.

4. The self-lockable electric trailer hitching apparatus of claim 3, **characterized in that** the limiting assembly comprises a guide groove (1104) provided on one of the spring seat (11) and the retaining seat (13), and a guide block (1302) provided on the other of the spring seat (11) and the remaining seat (13), such that when the transmission shaft (4) rotates, the guide block (1302) slides in the guide groove (1104), and both ends of the guide groove (1104) limiting sliding stroke of the guide block (1302) to limit the trailer hitch body (1) either to the resting position or the operating position.

5. The self-lockable electric trailer hitching apparatus of claim 1, **characterized in that** a limiting bracket having a second through-hole is provided between the first gear (3) and the mounting bracket (2); the limiting bracket being circumferentially limited with the transmission shaft (4); a limit ball is provided in the second through-hole, the limit ball being in clearance fit with the through-hole; the first gear (3) and the limit ball are connected via a second spring; a retaining seat (13) is fixedly provided on the mounting bracket (2); a plughole (1301) is provided in the retaining seat (13), such that the first gear (3) moves axially to push the limit ball to be partially plugged into the plughole (1301) to be self-locked.

6. The self-lockable electric trailer hitching apparatus of claim 1, **characterized in that** the transmission assembly further comprises a second gear (5) which is actuated by the electric motor (7) to rotate, the second gear (5) being engaged with the first gear (3).
